# DEMANDE DE BREVET EUROPEEN

(11) **EP 0 522 406 A1**
(43) Date de publication de la demande: **13.01.1993**
(21) Numéro de dépôt: 92110992.2
(22) Date de dépôt: 29.06.1992
(51) Int. Cl.: H01M 4/62, H01M 4/26, H01M 4/00

(54) **Masse active pour électrode de générateur électrochimique à support poreux tridimensionel**

(30) Priorité: 09.07.1991 FR 9108590
(71) Demandeur: SAFT, F-93230 Romainville (FR)
(72) Inventeur: Bouet, Jacques, F-75015 Paris (FR); Crochepierre, Bernard, F-33160 St Medard-en-Jalles (FR); Pichon, Bernadette, F-78140 Velizy-Villacoublay (FR)
(74) Mandataire: Weinmiller, Jürgen

(57) **Abrégé**

Masse active pour électrode de générateur électrochimique à support poreux tridimensionnel notamment de type mousse métallique, sous forme d'une pâte constituée d'une matière active de type hydroxyde ou hydrure métallique introduite dans un gel à base d'un hydroxycolloïde, caractérisée par le fait que ledit hydroxycolloïde est le xanthane et qu'il se trouve dans ledit gel dans une proportion comprise entre 0,5 % et 2 % en poids, la proportion de matière active dans ladite pâte étant comprise entre 40 % et 60 % en poids.

## Description

La présente invention concerne une masse active pour électrode de générateur électrochimique à support poreux tridimensionnel, par exemple du type mousse. Elle trouve notamment son application dans l'élaboration d'électrodes à base de matière active de forte densité (jusqu'à 7 à 9), et en particulier des électrodes négatives à hydrure métallique et des électrodes positives à hydroxyde de nickel.

On sait que de telles électrodes peuvent être réalisées en imprégnant un support métallique poreux tridimensionnel d'une masse active pâteuse, constituée de la matière active proprement dite introduite dans un gel à base d'un hydroxycolloïde tel que la carboxyméthylcellulose (CMC) ou l'hydroxypropylméthylcellulose (HPMC). Après enduction du support et séchage de la pâte, on peut obtenir une structure d'électrode utilisable telle quelle dans un générateur. L'intérêt d'un procédé de ce genre réside dans le fait que l'imprégnation d'un support poreux tridimensionnel de type mousse peut se faire en une seule étape, alors que le procédé antérieur de remplissage d'un support en nickel fritté classique nécessite plusieurs imprégnations successives pour arriver à la charge adéquate en matière active.

Néanmoins, le procédé préconisé ci-dessus présente quelques difficultés de mise en oeuvre, liées essentiellement à la viscosité de la pâte pendant les opérations de remplissage et de séchage. Les hydroxycolloïdes utilisés jusqu'à présent, s'ils confèrent à la pâte une viscosité bien adaptée pour le remplissage, ne permettent pas d'assurer ensuite correctement le maintien de cette pâte dans le support.

La présente invention a pour but d'éviter cet inconvénient et de proposer une masse active d'utilisation plus aisée que les masses actives connues jusqu'à présent.

La présente invention a pour objet une masse active pour électrode de générateur électrochimique à support poreux tridimensionnel, notamment de type mousse métallique, sous forme d'une pâte constituée d'une matière active de type hydroxyde ou hydrure métallique introduite dans un gel à base d'un hydroxycolloïde, caractérisée par le fait que ledit hydroxycolloïde est le xanthane et qu'il se trouve dans ledit gel dans une proportion comprise entre 0,5 % et 2 % en poids, la proportion de matière active dans ladite pâte étant comprise entre 40 % et 60 % en poids.

On appelle xanthane un hétéropolysaccharide constitué d'une chaîne principale de motifs βD glucose avec ramifications de motifs mannose et acide glucoronique.

Malgré la proportion importante de matière active dans la pâte, cette dernière présente, de manière très surprenante, les propriétés rhéologiques d'un fluide dit "rhéofluidisant" avec un seuil de plasticité. On aurait pu en effet s'attendre à un effet de décantation de la matière active.

La pâte selon l'invention présente au repos des forces internes (forces polaires, forces de Van der Waals) qui lui confèrent une viscosité infinie, c'est-à-dire un caractère de solide. Mais si on lui applique une contrainte de cisaillement dépassant les contraintes correspondant aux forces internes précitées, elle devient fluide ; dans ces conditions il est aisé de faire pénétrer la pâte dans son support. Dès que l'empâtage est terminé, la pâte ne coule pas et reste maintenue dans le support, car sa limite d'écoulement est supérieure à la contrainte de cisaillement due à la gravité.

On obtient des propriétés rhéologiques très intéressantes même avec des quantités de xanthane très faibles, comprises entre 0,5 % et 1 % en poids de gel. Pour obtenir des pâtes présentant une viscosité du même ordre, il fallait auparavant des proportions beaucoup plus importantes de CMC ou de HPMC. Grâce à la mise en oeuvre du xanthane, la proportion de carbonates issus de la dégradation de l'hydroxycolloïde lors du fonctionnement électrochimique de l'électrode se trouve considérablement réduit. Ceci constitue un avantage important de la présente invention, car un fort taux de carbonate nuit au fonctionnement du générateur électrochimique.

Selon une variante de réalisation, ledit gel comporte en outre de la caroube dans une proportion comprise entre 0,25 % et 0,5 % lorsque la quantité de xanthane est comprise entre 0,5 % et 1 %.

D'autres caractéristiques et avantages de la présente invention apparaîtront au cours de la description suivante de modes de réalisation donnés à titre illustratif mais nullement limitatif.

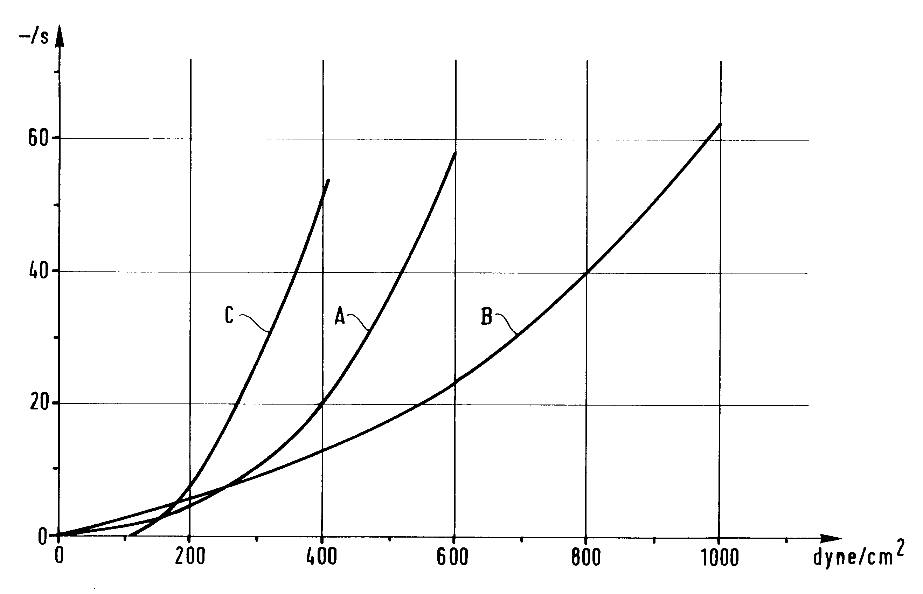

La figure unique montre pour deux pâtes de l'art antérieur et une pâte selon l'invention l'évolution de la tension de cisaillement (en dynes/cm2) en fonction de la vitesse de cisaillement (unité arbitraire/seconde). On prépare trois pâtes A, B, C contenant (en poids) 60 % d'hydroxyde de nickel et 40 % de gel à 1 % d'hydroxycolloïde.
- Pâte A : l'hydroxycolloïde est la carboxyméthylcellulose
- Pâte B : l'hydroxycolloïde est l'hydroxypropylméthylcellulose.
- Pâte C selon l'invention : l'hydroxycolloïde est du xanthane.
Les courbes A, B, C de la figure unique montrent les caractéristiques comparatives de ces trois pâtes.

La pâte au xanthane présente une limite d'écoulement de l'ordre de 125 dynes/cm2 alors que les pâtes A et B voient leur viscosité diminuer dès l'application d'une contrainte de cisaillement.

La contrainte de cisaillement due à la gravité de la pâte C introduite dans une mousse d'épaisseur 1,5 mm avec un diamètre moyen de pores de l'ordre de 300 micromètres est de l'ordre de 13,5 dynes/cm2. La limite d'écoulement de la pâte étant supérieure à la contrainte de cisaillement par gravité, la pâte ne s'écoule pas au moment du séchage. (Toutes les valeurs précédentes sont données pour la température ambiante).

Si on abaisse la teneur en xanthane à 0,5 %, la limite d'écoulement est de 21,35 dynes/cm2, valeur toujours supérieure à la contrainte de cisaillement par gravité.

Si on remplace dans la pâte C selon l'invention 0,5 % de xanthane par 0,5 % de caroube, on constate que la limite d'écoulement passe de 125 dynes/cm2 à 175 dynes/cm2. La teneur en caroube peut varier entre 0,25 % et 0,5 % en poids de gel, mais la pâte selon l'invention doit toujours contenir au moins 0,5 % de xanthane pour présenter des propriétés rhéologiques intéressantes.

Selon un autre exemple de mise en oeuvre, on réalise une pâte contenant 50 % en poids d'une poudre d'alliage métallique hydrurable présentant une taille de grains de l'ordre de 40 micromètres. Cette poudre est introduite dans un gel contenant de l'eau et 1 % de xanthane. La pâte ainsi élaborée est introduite par cisaillement dans la mousse métallique précédemment décrite et ensuite séchée sous atmosphère neutre à 40°C pour l'élimination de l'eau. Lors du séchage on observe que la qualité rhéologique de la pâte est telle qu'elle ne s'écoule pas de son support.

Après compression du support imprégné, ramenant l'épaisseur à 0,3 mm, on obtient une électrode de capacité massique égale à 300 mAh/g et de capacité volumique égale à 1,7 Ah/cm3.

Bien entendu l'invention n'est pas limitée aux exemples qui viennent d'être décrits.

## Revendications

1. Masse active pour électrode de générateur électrochimique à support poreux tridimensionnel notamment de type mousse métallique, sous forme d'une pâte constituée d'une matière active de type hydroxyde ou hydrure métallique introduite dans un gel à base d'un hydroxycolloïde, caractérisée par le fait que ledit hydroxycolloïde est le xanthane et qu'il se trouve dans ledit gel dans une proportion comprise entre 0,5 % et 2 % en poids, la proportion de matière active dans ladite pâte étant comprise entre 40 % et 60 % en poids.

2. Masse active selon la revendication 1, caractérisée par le fait que le xanthane se trouve dans ledit gel dans une proportion comprise entre 0,5 % et 1 % en poids.

3. Masse active selon la revendication 2, caractérisée par le fait que ledit gel comporte en outre de la caroube dans une proportion comprise 0,25 % et 0,5 % en poids de gel.
